(19) Europäisches Patentamt

European Patent Office

Office européen des brevets

(11) **EP 1 661 774 A1**

(12) **EUROPEAN PATENT APPLICATION**
published in accordance with Art. 158(3) EPC

(43) Date of publication:
**31.05.2006 Bulletin 2006/22**

(51) Int Cl.:
***B60R 21/26*** (1985.01)

(21) Application number: **04771258.3**

(22) Date of filing: **05.08.2004**

(86) International application number:
**PCT/JP2004/011231**

(87) International publication number:
**WO 2005/014344 (17.02.2005 Gazette 2005/07)**

(84) Designated Contracting States:
**AT BE BG CH CY CZ DE DK EE ES FI FR GB GR HU IE IT LI LU MC NL PL PT RO SE SI SK TR**

(30) Priority: **06.08.2003 JP 2003287405**

(71) Applicant: **NIPPON KAYAKU KABUSHIKI KAISHA Tokyo 102-8172 (JP)**

(72) Inventors:
- **SAITO, Tetsuo,**
  **c/o Himeji Factory of NIPPON KAYAKU Hyogo 6792123 (JP)**

- **DOSAI, T.,**
  **c/o Himeji Factory of NIPPON KAYAKU KK Himeji-shi, Hyogo 6792123 (JP)**
- **SUEHIRO, A.,**
  **c/o Himeji Factory of NIPPON KAYAKU Himeji-shi, Hyogo 6792123 (JP)**
- **TAMURA, Kazuhisa**
  **Kakogawa-shi, Hyogo,**
  **6750052 (JP)**

(74) Representative: **Intes, Didier Gérard André et al Cabinet Beau de Loménie,**
**158, rue de l'Université**
**75340 Paris Cedex 07 (FR)**

(54) **GAS PRODUCER**

(57) The present invention provides a gas generator capable of sufficiently loading gas generants into a combustion chamber, while the safety of the housing is secured, and also burning the gas generants inside the combustion chamber uniformly and effectively.

A gas generator A is provided with a metal housing 3 having an initiator shell 1 and a closure shell 2, a combustion chamber 5 into which gas generants 4 are loaded and an igniter 7 for igniting and burning the gas generants 4, in which the initiator shell 1 and the closure shell 2 have semi-spherical end plate portions 10 and 14, H/D of a ratio of H, a length of the housing to D, an outer diameter of the cylindrical portions 9 and 13 continuously formed from the end plate portions 10 and 14 is in the range from 0.4 to 1.3, the igniter 7 is provided with an inner cylindrical body 16 having a plurality of enhancer openings 15 and enhancers 17 loaded into the inner cylindrical body 16, and d/D or a ratio of d, an outer diameter of the inner cylindrical body 16 to D, an outer diameter of the end plate portions 10 and 14 is in the range from 0.1 to 0.5.

FIG. 1

# Description

## Technical Field

The present invention relates to a gas generator suitable for inflating an airbag, etc.

## Background Art

A gas generator which will rapidly inflate and deploy an airbag for protecting a passenger from an impact during a collision of the automobile is installed into an airbag module which is mounted into a steering wheel or an instrument panel. Then, the gas generator allows a squib to ignite through an electronic signal of a control unit (actuator) to burn gas generants by flame from the squib, thereby generating a great amount of gas abruptly.

Of conventional gas generators, there are available a two-cylinder type gas generator which is provided with a central space corresponding to an ignition chamber of gas generants and an annular space corresponding to a combustion/filter chamber which is concentrically formed at the external part and in which gas is burnt and cooled or slag is collected.

This type of gas generator includes, for example, that shown in FIG. 2, (refer to Patent Document 1). As shown in FIG. 2, a housing structure obtained by placing a two-cylinder-structured upper vessel 51 with a double short-tube-structured lower vessel 54 and subjecting them to friction welding (housing for the gas generator) is used as an ignition chamber at the central space and used as a combustion/filter chamber F at the annular space in the periphery. A squib 68 and enhancers 69 are fixed from below inside the ignition chamber P. A concaved ring-shaped lid member 66 having a double flange on the cross section is fixed in the combustion/filter chamber F by allowing each flange of 66d and 66e to respectively contact with burrs 52b and 53b of an upper vessel 51. Then, gas generants 57 and a cooling/slag-collecting member 60 are housed radially in sequence into an annular space sandwiched between a lid member 66 and an upper vessel 51, thereby forming the combustion/filter chamber F.

Further, ring-shaped cushion members 58 and 59 are, respectively, set respectively on an upper face and a lower face of the layer of the gas generants 57. In addition, seal members 61 and 62 are, respectively, set on the upper face and the lower face of the cooling/slag-collecting member 60. Moreover, an aluminum foil 64 for closing a gas discharging orifice 53a and an aluminum foil 65 for closing an enhancer orifice 52a are attached. The above-described constitution makes it possible to sufficiently with stand a rise inner pressure resulting from the gas generated inside the gas generation chamber G.

Patent Document 1: Japanese Published Unexamined Patent Application No. H09-207705

## Disclosure of the Invention

## Problems to be Solved by the Invention

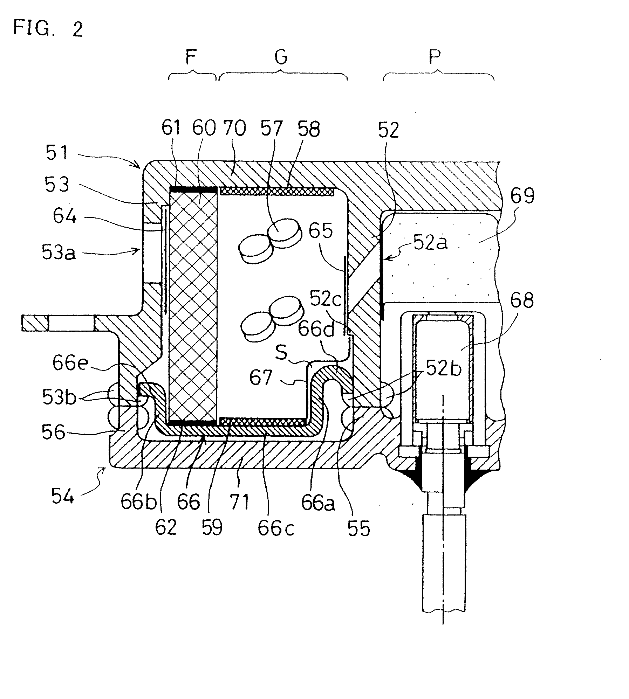

However, the two-cylinder type gas generator shown in FIG. 2 is larger in the number of parts constituting the gas generator and complicated in structure. Therefore, some limitations are imposed on reducing the manufacturing cost, while the safety of the gas generator is maintained. Further, it is small in capacity of holding gas generants and mainly used for a driver's seat, posing difficulty when used for a front passenger seat which require a large quantity of gas for inflating an airbag. In addition, in order to rapidly inflate the airbag, it is necessary to burn gas generants in the combustion chamber as uniformly as possible. However, in a gas generator having the above-described structure, there may be a difficulty in burning gas generants inside the gas generation chamber uniformly, when enhancers in the ignition chamber are ignited and burnt to spout a heat current from enhancer orifices into a gas generation chamber.

An object of the present invention is to provide a gas generator capable of sufficiently loading gas generants into a combustion chamber, while the safety of the housing is maintained and also capable of burning the gas generants inside the combustion chamber uniformly and effectively.

## Means for Solving the Problem and Effects of the Invention

The gas generator of the first invention is a gas generator which is provided with a metal housing having an initiator shell and a closure shell, a combustion chamber which is formed inside the housing and into which gas generants generating a high-temperature gas through combustion are loaded, a filter member disposed around the combustion chamber, an igniter mounted into the housing and igniting and burning the gas generants inside the combustion chamber and a plurality of gas discharge openings formed in the housing and discharging the gas generated in the combustion chamber, wherein either or both of the initiator shell and the closure shell constituting the housing have semi-spherical or semi-oval end plate portions and cylindrical portions having a diameter Dformed continuously from these end plate portions, H/D which is a ratio of H, a housing distance between an end plate portion of the initiator shell and that of the closure shell to D, an outer diameter of the cylindrical portions is in the range from 0.4 to 1.3, the igniter is mounted inside the housing and provided with an inner cylindrical body having a plurality of enhancer openings and also a bottom portion, enhancers loaded into the inner cylindrical body and a squib mounted so as to be in contact with the enhancers inside the inner cylindrical body, and d/D which is a ratio of d, an outer diameter of the inner cylindrical body of D, an outer diameter of the end plate portion is in the range from 0.1 to 0.5.

The above-described constitution makes it possible to prevent a stress concentration on a housing since the housing has semi-spherical or semi-oval end plate portions. Therefore, the housing can be prevented from deformation due to a gas generation inside the combustion chamber. Such a constitution also makes it possible to simplify the structure of the housing and reduce the number of parts, thereby making the gas generator smaller in size and lighter in weight to significantly reduce the manufacturing cost.

Where d, an outer diameter of the inner cylindrical body is excessively large in relation to D, an outer diameter of the end plate portion, the combustion chamber is made smaller in volume, thereby reducing the quantity of gas generants that can be loaded into the combustion chamber. In contrast, where d, an outer diameter of the inner cylindrical body is excessively small in relation to D, an outer diameter of the end plate portion, a heat current spouted from the inner cylindrical body may not be uniformly spread across the combustion chamber, thereby making it impossible to burn gas generants effectively, upon ignition and burning of enhancers by a squib inside the inner cylindrical body. Therefore, where d/D which is a ratio of d, an outer diameter of the inner cylindrical body of D, an outer diameter of the end plate portion is established in the range from 0.1 to 0.5 and preferably from 0.15 to 0.3, the combustion chamber is secured in a sufficient capacity, and gas generants can be loaded into the combustion chamber sufficiently in generating a necessary quantity of gas. Further, a heat current can be effectively spouted all over the gas generants in the combustion chamber from the inner cylindrical body, thereby making it possible to burn gas generants uniformly inside the combustion chamber.

The gas generator of the second invention is characterized in that in the above-described first invention, h/H which is a ratio of h, a length of the inner cylindrical body to H, a length of the housing in the direction of elongation of the inner cylindrical body is in the range from 0.5 to 0.95. Where h, a length of the inner cylindrical body is excessively small in relation to H, a length of the housing in the direction of elongation of the inner cylindrical body, a heat current spouted from the inner cylindrical body may not be uniformly spread across the combustion chamber when enhancers are ignited and burnt by a squib in the inner cylindrical body.

Then, where h/H is in the range from 0.5 to 0.95 and preferably from 0.65 to 0.9, the inner cylindrical body is allowed to elongate long in the combustion chamber inside the housing. Therefore, a heat current can be effectively spouted all over the gas generants loaded into the combustion chamber from enhancers ignited and burnt inside the inner cylindrical body via a plurality of enhancer openings, thereby making it possible to burn uniformly the gas generants inside the combustion chamber.

The gas generator of the third invention is characterized in that in the above-described first invention, a plurality of enhancer openings are available in various shapes such as a circle, oval, long hole, rectangle, rhomboid or trapezoid. Therefore, a plurality of enhancer openings having such a shape are provided on an outer circumference of the inner cylindrical body, thereby making it possible to spout a heat current to the combustion chamber from enhancers ignited and burnt inside the inner cylindrical body via a plurality of these enhancer openings and uniformly burn the gas generants inside the combustion chamber.

The gas generator of the fourth invention is characterized in that in the above-described first invention, the number of enhancer openings is four or more. Further, the number of these enhancer openings is preferably eight or more. Therefore, providing a plurality of enhancer openings makes it possible to effectively spout a heat current all over the gas generants inside the housing from enhancers ignited and burnt inside the inner cylindrical body through a plurality of enhancer openings and also uniformly burn the gas generants inside the combustion chamber.

The gas generator of the fifth invention is characterized in that in the above-described first invention, SA/SE, which is a ratio of SA, a total opening area of a plurality of enhancer openings to SE, a surface area of the inner cylindrical body is in the range from 0.01 to 0.4. Where SA, a total opening area of a plurality of enhancer openings is excessively small in relation to SE, a surface area of the inner cylindrical body, a heat current is hardly spouted to the combustion chamber from the inner cylindrical body upon ignition and burning of enhancers by the squib inside the inner cylindrical body, by which the heat current may not be uniformly spread across the combustion chamber.

Therefore, where SA/SE is established in the range from 0.01 to 0.4, preferably from 0.02 to 0.3 and more preferably from 0.08 to 0.2, the heat current can be effectively spouted all over the gas generants inside the combustion chamber from the inner cylindrical body, thereby making it possible to burn uniformly the gas generants in the combustion chamber.

The gas generator ot the sixth invention is characterized in that in the above-described first invention, SA/SD which is a ratio of SA, a total opening area of a plurality of enhancer openings to SD, a total opening area of a plurality of gas discharge openings is in the range from 0.15 to 4.5. Where SA, a total opening area of a plurality of enhancer openings is excessively large in relation to SD, a total opening area of a plurality of gas discharge openings, a heat current is spouted greatly from the inner cylindrical body into the combustion chamber, thereby instantly generating a large quantity of gas upon burning of the gas generants in the combustion chamber. In this instance, the gas generated inside the combustion chamber is hardly discharged from the gas discharge openings to the outside, and the pressure inside the combustion chamber may be raised excessively. In contrast, where SA, a total opening area of a plurality of enhancer openings is excessively small in relation to SD, a total opening area of a plurality of gas discharge openings, a heat current is supplied from the inner cylindrical body to the combustion chamber in a small quantity, resulting in a small quantity of gas generated in the combustion chamber. Therefore, the gas may not be discharged from a plurality of gas discharge openings to the outside in a necessary quantity.

Therefore, where the SA/SD is established in the range from 0.15 to 4.5, preferably from 0.30 to 3.50, and more preferably from 0.50 to 3. 00, it is possible to adjust a quantity of the heat current spouted from the inner cylindrical body to the combustion chamber via a plurality of enhancer openings and a quantity of the gas discharged from the gas discharge openings, thereby preventing an excessive rise in the pressure inside the combustion chamber and also discharging an appropriate quantity of combustion gas from the housing.

The gas generator of the seventh invention is characterized in that in the above-described first invention, WG/WE which is a ratio of WG, a loaded quantity of the gas generants to WE, a loaded quantity of the enhancers is in the range from 10 to 60. Further, the WG/WE is preferably in the range from 15 to 50 and more preferably from 20 to 45. Where the WG/WE is established in the above-described range, it is possible to adjust a quantity of the heat current spouted from the inner cylindrical body to the combustion chamber and a quantity of the combustion gas generated upon combustion of gas generants inside the combustion chamber when enhancers are burnt in the inner cylindrical body. Further, an excessive rise of the pressure inside the combustion chamber can be prevented and the combustion gas can also be discharged in an appropriate quantity.

Best Mode for Carrying Out the Invention

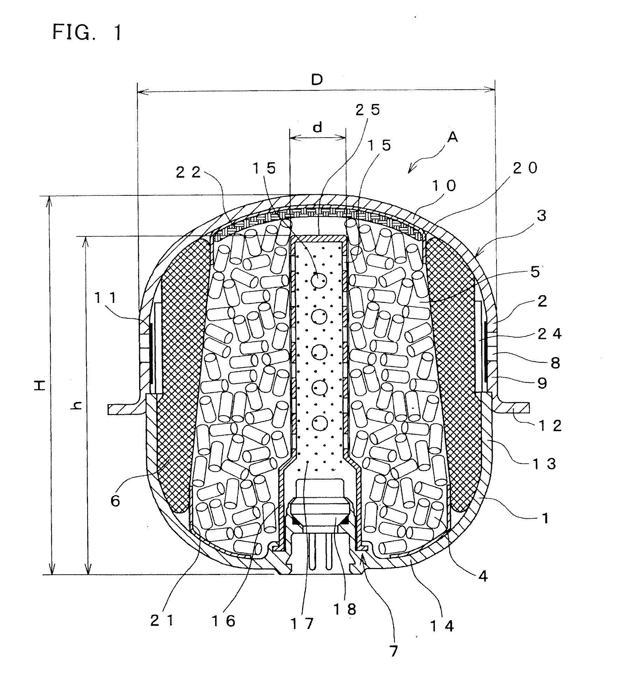

Next, an explanation will be made for embodiments of the present invention with reference to the drawings. In this embodiment, the present invention is applied to a gas generator for inflating and deploying an airbag. Further, each direction of right and left or top and bottom indicated in FIG. 1 will be used as it is in the following explanation.

As shown in FIG. 1, a gas generator A is provided with an approximately spherical housing 3 made of a metal such as iron, stainless steel, aluminum and other steel and constituted by an initiator shell 1 and a closure shell 2, a combustion chamber 5 formed inside the housing 3 and into which gas generants 4 generating a high-temperature gas through combustion are loaded, a filter member 6 disposed around the combustion chamber 5, and an igniter 7 mounted inside the housing 3 and igniting and burning the gas generants 4 in the combustion chamber 5.

First, an explanation will be made for the housing 3. The closure shell 2 of the housing 3 is constituted by a cylindrical portion 9, a semi-spherical end plate portion 10 formed continuously from the cylindrical portion 9 and a flange portion 12 extended externally from the lower end of the cylindrical portion 9. The initiator shell 1 and the closure shell 2 are preferably in the range from 2 . 5mm to 3mm in thickness. The cylindrical portion 9 is usually 5mm or more in length, preferably in the range from 5mm to 30mm and more preferably from 10mm to 30mm. H/D which is a ratio of H, a length of the housing between the end plate portion 14 of the initiator shell 1 and 10 of the closure shell 2 to D, an outer diameter of the cylindrical portions 13 and 9 is usually in the range from 0.4 to 1.3, preferably from 0.6 to 1.3 and more preferably from 1.0 to 1.3. Where the above-described ratio of H/D is less than 0.4, the gas generator may not be assembled due to structural features. Where it exceeds 1.3, the gas generator approaches to a cylindrical-type gas generator in structure. Therefore, establishing the ratio within the above-described range can prevent deformation of the housing 10 even upon a rise in the pressure inside the gas generator 1 and also makes the gas generator smaller in size. A plurality of circular gas discharge openings 8 are formed on the cylindrical portion 9 at a predetermined space in a circumferential direction. It is preferable that a plurality of these gas discharge openings 8 are formed in plural arrays, for example, in two or three arrays or in a zigzag form, with the openings being deviated vertically by approximately half of the opening diameter. Since the plurality of gas discharge openings 8 are formed, gas generated in the housing 3 will not concentrate locally but will be discharged and dispersed. Therefore, it is possible to prevent deformation of the housing 3 and also prevent damage of a filter member 6 for cooling the gas and filtering residue, which will be described later. Further, the filter member 6 can be used at various areas in vertical and circumferential directions to make effective use of the filter member 6.

It is not necessary to make a plurality of gas discharge openings 8 all the same in diameter but the gas discharge openings 8 having a different diameter may be combined appropriately. As explained above, the pressure inside the housing 3 can be adjusted by providing the gas discharge openings 8 with any appropriate diameter. For example, a rise in the pressure inside the housing 3 can be prevented by making the gas discharge openings 8 larger in diameter. Further, the closure shell 2 and the initiator shell 1 constituting the housing 3 can be made thin in accordance with the pressure inside the housing 3. In addition, the diameter is changed in accordance with types of gas generants 4, thereby making it possible to adjust gas generation characteristics such as pressure and temperature.

These gas discharge openings 8 are closed by a rupture member 11 made of band-form aluminum tape and attached inside a cylindrical portion 9, by which a space inside the combustion chamber 5 is sealed.

As with the above-described closure shell 2, the initiator shell 1 which is joined to the closure shell 2 by pressure contact or welding is constituted by a cylindrical portion 13 and a semi-spherical end plate portion 14 formed continuously from the cylindrical portion 13. Then, an igniter 7 is provided at the center of the end plate portion 14. As described above, since the cylindrical portion 13 is formed on the initiator shell 1, the initiator shell 1 can be easily joined to the closure shell 2 by pressure contact, welding or other methods . Further, where the closure shell 2 can be directly joined at the end of the end plate portion 14 by pressure contact, welding and other methods, the initiator shell 1 can be constituted only by the end plate portion 14 alone, without the cylindrical portion 13.

As explained so far, the initiator shell 1 and the closure shell 2 are provided with semi-spherical end plate portions 10 and 14, thereby making it possible to remove portions where stress concentrates on the housing 3 upon generation of gas in the combustion chamber 5 as much as possible. Therefore, deformation of the housing 3 during gas generation can be reduced to a minimum, and the gas generator A can be simplified in structure to reduce the number of components.

Further, the end plate portions 10 and 14 are not restricted to those in a semi-spherical shape, but semi-oval end plate portions may also be used to provide the same effect that is obtained by the semi-spherical shape.

A combustion chamber 5 is formed inside the housing 3 and gas generants 4 are loaded into the combustion chamber 5. Then, the gas generants 4 are burnt in the combustion chamber 5 by a heat current supplied from an igniter 7 to be described later, thereby generating combustion gas in the combustion chamber 5.

The gas generants 4 are non-azide compositions and those made of fuels, oxidizers and additives (binder, slag-forming agent and combustion-adjusting agent) may be used.

Fuels include, , for example, nitrogen-containing compounds. Nitrogen-containing compounds include one or more types of mixtures selected from triazole derivatives, tetrazole derivatives, guanidine derivatives, azodicarbon amide derivatives, hydrazine derivatives, urea derivatives and ammine complexes.

Triazole derivatives include, for example, 5-oxo-1, 2, 4-triazole and amino triazole. Tetrazole derivatives include, for example, tetrazole, 5-aminotetrazole, aminotetrazole nitrate, nitroaminotetrazole, 5,5'-bi-1H-tetrazole, 5,5'-bi-1H-tetrazole diammonium salt and 5,5'-azotetrazole diguanidium salt.

Guanidine derivatives include, for example, guanidine, nitroguanidine, cyanoguanidine, triaminoguanidine nitrate, guanidine nitrate, aminoguanidine nitrate and guanidine carbonate. Azodicarbonamide derivatives include, for example, azodicarbonamide. Hydrazine derivatives include, for example, carbohydrazide, carbohydrazide nitrate complex, dihydrazide oxalate and hydrazine nitrate complex. Urea derivatives include, for example, biurets. Ammine complexes include, for example, hexaammine copper complex, hexaammine cobalt complex, tetraammine copper complex and tetraammine zinc complex.

Of these nitrogen-containing compounds, one or more types of compounds selected from tetrazole derivatives and guanidine derivatives are preferable, and nitroguanidine, guanidine nitrate, cyanoguanidine, 5-aminotetrazole, aminoguanidine nitrate and guanidine carbonate are particularly preferable.

These nitrogen-containing compounds in the gas generants 4 are different in mixture ratio, depending on the number of carbon atoms, hydrogen atoms and other atoms to be oxidized in the molecular formulae, preferably in the range from 20% by weight to 70% by weight and more preferably from 30% by weight to 60% by weight. Further, the nitrogen-containing compounds are different in absolute value of the mixture ratio, depending on types of oxidizers to be added to the gas generants 4. However, the concentration of trace amount CO in generated gas will increase when an absolute value of the mixture ratio in the nitrogen-containing compounds is greater than a total oxidation theoretical amount. In contrast, the concentration of trace amount NOx in the generated gas will increase when an absolute value of the mixture ratio in the nitrogen-containing compounds is equal to or lower than a total oxidation theoretical amount. Accordingly, most preferable is a range in which both of them are optimally balanced.

Preferable oxidizers include those selected from at least one type of cation-containing nitrates, nitrites and perchlorates selected from alkaline metals, alkaline earth metals, transition metals and ammonium. Also, available are oxidizers other than nitrates, namely, nitrites and perchlorates which are frequently used in an airbag inflator field. However, they will decrease in the number of oxygen in nitrite molecule as compared with the nitrate molecule or may reduce the production of fine powder mist easily discharged out of the bag, and therefore nitrates are preferable. Nitrates include, for example, sodium nitrate, potassium nitrate, magnesium nitrate, strontium nitrate, phase stable ammonium nitrate and basic copper nitrate. Preferable are strontium nitrate, phase stable ammonium nitrate and basic copper nitrate.

A mixture ratio of oxidizers in the gas generants 4 is different in absolute value, depending on types and quantities of nitrogen-containing compounds to be used, and preferably in the range from 30% by weight to 80% by weight. The ratio is in particular preferably in the range from 40% by weight to 75% by weight, with consideration given to the concentrations of the above-described CO and NOx.

Any binders may be available as an additive as long as they will not significantly affect a combustion behavior of gas generants. Binders include, for example, organic binders such as metallic salts of carboxymethylcellulose, methylcellulose, hydroxyethylcellulose, cellulose acetate, cellulose propionate, cellulose acetate butyrate, nitrocellulose, microcrystalline cellulose, guar gum, polyvinyl alcohol, polyacrylamide, polysaccharide derivatives (e.g., starch) and stearate as well as inorganic binders such as molybdenum disulfide, synthetic hydroxytalcite, acid clay, talc, bentonite, diatomaceous earth, kaolin, silica and alumina.

A mixture ratio of binders is preferably in the range from 0% by weight to 10% by weight for press molding and from 2% by weight to 15% by weight for extrusion molding. Molded articles will increase in breaking strength with an increase in an added quantity of binders. However, when the number of carbon atoms and hydrogen atoms in compositions is increased and the concentration of trace amount CO gas which is an incomplete combustion product of carbon atom is raised, the quality of generated gas is deteriorated. It is preferable to use binders in a minimum quantity because they may inhibit burning of gas generants. In particular, a quantity of binders exceeding 15% by weight may need a relatively larger quantity of oxidizers to reduce a relative percentage of fuels, thereby making it difficult to provide a practicable gas generator system.

Further, for additives, slag-forming agents may be added as compositions other than binders. Slag-forming agents are added to facilitate filtration of a filter inside the gas generator through interactions with metallic oxides particularly generated from oxidizer compositions in gas generants.

The slag-forming agents include, for example, natural clays mainly made of alumino silicate such as silicon nitride, silicon carbide, acid clay, silica, bentonite and kaolin, synthetic clays such as synthetic mica, synthetic kaolinite and synthetic smectite and those selected from talc which is a type of hydrous magnesium silicate mineral, etc. Of these materials, acid clay and silica are preferable and acid clay is particularly preferable. A mixture ratio of slag-forming agents is preferably in the range from 0% by weight to 20% by weight and particularly preferably from 2% by weight to 10% by weight. An excessively large quantity of agents will reduce the linear burning velocity or gas generation efficiency, while an excessively small quantity will not provide a full slag-forming function.

Preferable combinations of gas generants 4 are gas generants which contain 5-aminotetrazole, strontium nitrate, synthetic hydrotalcite and silicon nitride, and those containing guanidine nitrate, strontium nitrate, basic copper nitrate and acid clay.

Combustion-adjusting agents may also be added, whenever necessary. Combustion-adjusting agents include explosive compounds such as metallic oxide, ferrosilicon, activated carbon, graphite, hexogen, octogen and 5-oxo-3-nitro-1,2,4-triazole. A mixture ratio of combustion-adjusting agents is preferably in the range from 0% by weight to 20% by weight and particularly preferably from 2% by weight to 10% by weight. An excessively large quantity of agents will reduce the gas generation efficiency, while an excessively small quantity will not provide a sufficient burning velocity.

The thus constituted gas generants are available in the shape of a pellet, circular column, single-pore cylinder, porous cylinder, disk or hollow body with both ends closed, and preferably in a cylindrical shape with both ends closed. A state in which molded articles of gas generants 4 are closed at both ends means a state in which pores opened at both ends are closed by two forces coming from the outside to the inside. The pores may be available either in a completely closed state or an incompletely closed state.

An explanation will be made for a method for manufacturing hollow-body-shaped gas generants 4 with both ends closed. The above-described non-azide based compositions made with nitrogen-containing compounds, oxidizers, slag-forming agents and binders are at first mixed by using a V-type mixer, a ball mill or others. Then, the resultant is mixed, with water or a solvent (for example, ethanol) added, to obtain a bulk ingredient in a wet state. Here, the wet state is a state having plasticity to some extent in which water or a solvent is contained preferably in the range from 10% by weight to 25% by weight and more preferably from 13% by weight to 18% by weight. Thereafter, the wet bulk ingredient is, as it is, processed by using an extruder (for example, that equipped with a dice or an inner hole pin at the exit) to obtain extrusion-molded hollow cylindrical molded articles, the outer diameter of which is preferably in the range from 1.4mm to 4mm and more preferably from 1.5mm to 3.5mm and the inner diameter of which is preferably in the range from 0.3mm to 1.2mm and more preferably from 0.5mm to 1.2mm. Thereafter, the extrusion-molded hollow cylindrical molded articles are subjected to pressing treatment at a uniform interval to obtain cylindrical molded articles with both ends closed. Usually, the hollow cylindrical molded articles are subjected to pressing treatment at a uniform space and then cut off by folding them a respectively t the closed recesses. Thereafter, they are dried at two stages, namely, usually in the range from 50°C to 60°C for 4 hours to 10 hours and then, usually in the range from 105°C to 120°C for 6 hours to 10 hours, thereby making it possible to obtain cylindrical shaped gas generants which have a space therein, with the ends closed. The thus obtained gas generants are usually in the range from 1.5mm to 8mm in length, preferably from 1.5mm to 7mm and more preferably from 2mm 6.5mm.

Further, the gas generants 4 are determined for linear burning velocity under constant pressure conditions. The determination is empirically performed according to the following Vielle's formula.

$$r = a\,P^{n}$$

wherein r denotes linear burning velocity; a, constant number; P, pressure; n, pressure exponent. The pressure exponent of n denotes a slope obtained by logarithmic plotting of X axis pressure in relation to the exponent of Y axis burning velocity.

A linear burning velocity of the gas generants used in the gas generator of the present embodiment is preferably in the range from 3mm/second to 60mm/second under 70kgf/cm$^2$ and more preferably from 5mm/second to 35mm/second. Further, the pressure exponent is preferably in the range of n = 0.90 or lower, more preferably n=0.75 or lower, further more preferably n=0.60 or lower and in particular preferably in the range from n=0.60 to n=0.30.

General methods for determining the linear burning velocity include a strand burner method, a compact motor method and a sealed pressure vessel method. More specifically, a test piece obtained by coating a restrictor on the surface after being molded to a predetermined size by press molding is used to determine the burning velocity in a high-pressure vessel by a fuse cutting method or others. In this instance, the linear burning velocity is determined by referring to the pressure inside the high pressure vessel as a variable and the pressure exponent is determined in accordance with vielle's formula above.

A filter member 6 is provided along the inner wall of the cylindrical portions 9 and 13 inside the housing 3 constituted of the closure shell 2 and the initiator shell 1. The filter member 6 is manufactured inexpensively by forming annular bulk materials of metal wires or metal windings such as plain stitch wire netting, square-weave wire netting and crimped wire netting. The filter member 6 is pressed to an inner wall of the housing 3 by presser members 20 and 21 respectively provided on an inner face of the end plate portion 10 of the closure shell 2 and on an inner face of the end plate portion 14 of the initiator shell 1.

A filter presser member 24 is provided around the gas discharge openings 8 on an outer circumference of the filter member 6. The filter presser member 24 is a plate member having a plurality of pores which is so-called punching metal and formed in a ring form. As described above, the filter presser member 24 is provided on an outer circumference of the filter member 6 around the gas discharge openings 8, thereby making it possible to prevent deformation of the filter member 6 due to the pressure on discharge of gas from the housing 3.

Further, a cushion member 22 is provided on an inner face of the end plate portion 10 of the closure shell 2. The cushion member 22 is made of, for example, ceramic fiber and silicon foam, acting to prevent breakage of the gas generants 4 loaded inside the combustion chamber 5 such as cracks resulting from vibration.

Next, an explanation will be made for an igniter 7. The igniter 7 is provided at the center of the end plate portion 14 of the initiator shell 1. The igniter 7 is constituted by an inner cylindrical body 16 provided in the housing 3 and having a plurality of enhancer openings 15 and also a bottom portion 25, enhancers 17 loaded into the inner cylindrical body 16 and a squib 18 mounted so as to be in contact with the enhancers 17.

The enhancers 17 are used for securely burning gas generants 4 in the combustion chamber 5. The enhancers 17 include compositions made with metal powders and oxidizers, a representative example of which is B/KNO$_3$ for general use, nitrogen-containing compounds, compositions which contain oxidizers and metal powders and gas generant compositions.

For the enhancers 17 containing of metal powders and oxidizers, it is preferable that the metal powders are in the range from 1% by weight to 30% by weight and the oxidizers are in the range from 70% by weight to 95% by weight. For those containing nitrogen-containing compounds, oxidizers and metal powders, it is preferable that nitrogen-containing compounds are in the range from 0% by weight to 40% by weight, the oxidizers are in the range from 50% by weight to 90% by weight and the metal powders are in the range from 1 to 30% by weight. Further, molding binders which can be used for gas generants may be contained in the range from 0 to 10% by weight, whenever necessary. The molding binders may include those which can generally be used for gas generants. Further, the enhancers 17 are available in the shape of a grain, granule, pellet (corresponding to a form of tablets generally found in drugs), circular column, tube or disk. The tubular shape includes, for example, a cylindrical shape, and the cylindrical shape includes, for example, a single-pore cylindrical shape and a porous cylindrical shape . These are manufactured by a powder mixture, granulation method (granulation by agitation, granulation by spray drying, extrusion granulation, rolling granulation and compression granulation) and tablet compression method, etc.

The inner cylindrical body 16 is fixed to the end plate portion 14 of the initiator shell 1 by crimping or any other appropriate method. Further, the inner cylindrical body 16 is formed in an elongated cylindrical shape extending upward from the lower end of the combustion chamber 5 provided inside the housing 3. A plurality of enhancer openings 15 are for discharging a heat current to the combustion chamber 5 upon ignition and burning of the enhancers 17 inside the inner cylindrical body 16 and formed on an outer circumference of the inner cylindrical body 16 or preferably on an outer circumference of a portion where a squib 18 is not housed.

In this instance, where d, an outer diameter of the inner cylindrical body 16 is excessively larger in relation to D, an outer diameter of the end plate portion 14 (outer diameter of the housing), the combustion chamber 5 is made small in capacity, resulting in a decreased quantity of gas generants 4 that can be loaded into the combustion chamber 5. In contrast, where d, an outer diameter of the inner cylindrical body 16 is excessively small in relation to D, an outer diameter of the end plate portion 14, a heat current spouted from the inner cylindrical body 16 may not be uniformly spread across the combustion chamber 5, upon ignition and burning of the enhancers 17 by the squib 18 inside the inner cylindrical body 16. Therefore, d/D, of a ratio of d, an outer diameter of the inner cylindrical body 16 to D, an outer diameter of the end plate portions 10 and 14 is established in the range from 0.1 to 0.5 and preferably from 0.15 to 0.3 . A bottom portion 25 is provided at a portion where the squib 18 is not housed.

Further, where h, a length of the inner cylindrical body 16 is excessively small in relation to H, a length (height) of the housing 3 in the direction of elongation of the inner cylindrical body 16, a heat current spouted from the inner cylindrical body 16 may not be uniformly spread across the combustion chamber 5 when enhancers are ignited and burnt by the squib 18 inside the inner cylindrical body 16. Then, h/H of a ratio of h, a length (direction of elongation) of the inner cylindrical body 16 to H, a length of the housing 3 (direction of elongation of the inner cylindrical body 16) is established in the range from 0.5 to 0.95 and preferably from 0.65 to 0. 9.

The d/D and h/H are established in the respective ranges, thereby making it possible to load gas generants 4 into the combustion chamber 5 sufficiently in generating a necessary quantity of gas while the combustion chamber 5 is secured in a sufficient capacity. Further, a heat current is effectively spouted from the inner cylindrical body 16 all over gas generants 4 inside the combustion chamber 5, by which the gas generants 4 can be burnt uniformly in the combustion chamber 5 to rapidly inflate and deploy an airbag.

The number of enhancer openings 15 is 4 or more, preferably 8 or more and more preferably from 8 to 28. For example, in the gas generator A of the present embodiment, as shown in FIG. 1, one array of the enhancer openings 15 constituted by vertically arranged 5 or 6 circular enhancer openings 15 is provided at each of the quadrisections in a circumferential direction of the inner cylindrical body 16, or four arrays are provided. One array of the enhancer openings 15 may be provided at each of the trisections to quintisections in a circumferential direction of the inner cylindrical body 16. However, as shown in FIG. 1, it is preferable to provide one array at each of the quadrisections in a circumferential direction. In this instance, as shown in FIG. 1, it is also preferable that arrays of the enhancer openings 15 adjacent to a circumferential direction are formed so as to be deviated slightly in a vertical direction (for example, to be deviated by the diameter of the enhancer opening 15). The above-described constitution makes it possible to effectively spout a heat current from the inner cylindrical body 16 to the combustion chamber 5 via a plurality of enhancer openings 15 upon ignition and burning of the enhancers 17 by the squib 18. Further, the same effect can be obtained when the vertically adjacent enhancer openings 15 are formed so as to be deviated in a circumferential direction. Where the enhancer openings 15 are in a circular form, the diameter is preferably in the range from 3 . 5mm to 4 . 5mm. Further, a plurality of these enhancer openings 15 are not restricted to a circular form as shown in FIG. 1 but may be available in various shapes such as a circle, oval, long hole, rectangle, rhomboid and trapezoid.

Further, where SA, a total opening area of a plurality of enhancer openings 15 is excessively large in relation to SE, a surface area of the inner cylindrical body 16, the enhancers 17 may leak from the inner cylindrical body 16. In contrast, where it is excessively small, a heat current may be hardly spouted from the inner cylindrical body 16 to the combustion chamber 5 upon ignition and burning of the enhancers 17 by the squib 18 inside the inner cylindrical body 16. Consequently, the heat current may not be uniformly spread all over the combustion chamber 5. In this instance, the surface area SE of the inner cylindrical body 16 may be only an area of the outer circumference of the inner cylindrical body 16 or a sum of the area of the outer circumference of the inner cylindrical body 16 and an area of the bottom portion 25. Therefore, the SA/SE is established in the range from 0.01 to 0.4, preferably from 0.02 to 0.30 and more preferably from 0.08 to 0.20. The SA/SE is established in the above range, thereby making it possible to securely load the enhancers 17 into the inner cylindrical body 16 and spout a heat current from the inner cylindrical body16 all over the gas generants 4 inside the combustion chamber 5. Consequently, the gas generants can be uniformly burnt inside the combustion chamber 5.

Where SA, a total opening area of a plurality of enhancer openings 15 is excessively large in relation to SD, a total opening area of a plurality of gas discharge openings 8, the generated gas is hardly discharged from the gas discharge openings 8 and the pressure inside the combustion chamber 5 may be excessively elevated, when a heat current is spouted from the inner cylindrical body 16 into the combustion chamber 5 to burn gas generants 4 in the combustion chamber 5 for gas generation. In contrast, where SA, a total opening area of a plurality of enhancer openings 15 is excessively small in relation to SD, a total opening area of a plurality of gas discharge openings 8, a heat current is supplied from the inner cylindrical body 16 to the combustion chamber 5 in a smaller quantity to reduce the quantity of gas generated in the combustion chamber 5, thereby making it impossible to supply a necessary quantity of gas to an airbag from a plurality of gas discharge openings 8.

Therefore, the range of SA/SD is established in the range from 0.15 to 4.5, preferably from 0.3 to 3.5 and more preferably from 0.5 to 3.0. Where the SA/SD is established in the above range, it is possible to adjust a quantity of the heat current spouted from the inner cylindrical body 16 to the combustion chamber 5 through a plurality of enhancer openings 15 and a quantity of the gas discharged from the gas discharge openings 8, thereby making it possible to prevent an excessive a rise in the pressure inside the combustion chamber 5 and discharge an appropriate quantity of the gas into an airbag.

Further, WG/WE which is a ratio of WG, a loaded quantity of the gas generants 4 to WE, a loaded quantity of the enhancers 17 inside the inner cylindrical body 16 is in the range from 10 to 60, preferably from 15 to 50, and more preferably from 20 to 45. Where the WG/WE is established in the above-described range, it is possible to adjust a quantity of the heat current spouted from the inner cylindrical body 16 to the combustion chamber 5 through a plurality of enhancer openings 15 and a quantity of the gas generated inside the combustion chamber, thereby making it possible to prevent an excessive a rise in the pressure inside the combustion chamber 5 and also discharge an appropriate quantity of combustion gas from the housing 3.

The above-described gas generator A is a single-cylinder type gas generator and mainly installed into an airbag module to be fitted into an instrument panel for a front passenger seat.

After being installed into the airbag module, an igniter 7 of the gas generator A is connected to a connector on the automobile side (not illustrated). It is obvious that the gas generator A may also be used in an airbag module for a driver's seat.

Then, for example, when a collision sensor provided on the automobile detects a collision of the automobile, a squib ignition circuit connected to an igniter 7 allows the igniter 7 to actuate, thereby igniting and burning enhancers 17 loaded into the inner cylindrical body 16 to spout a heat current from the inner cylindrical body 16 to the combustion chamber 5 via a plurality of enhancer openings 15. In this instance, an outer diameter of the housing 3, an outer diameter of the inner cylindrical body 16, an opening diameter of a plurality of enhancer openings 15, their numbers and positions, and loaded quantities of the gas generants 4 and enhancers 17 are appropriately established within the above-described ranges, thereby making it possible to load the gas generants 4 into the combustion chamber in a quantity sufficient in generating a necessary quantity of gas, while the combustion chamber 5 is secured in a sufficient capacity. Further, a heat current can be spouted from the inner cylindrical body 16 all over the gas generants 4 in the combustion chamber 5 and also the gas generants 4 can be burnt uniformly in the combustion chamber 5.

When a heat current is spouted from the inner cylindrical body 16 to gas generants 4 in the combustion chamber 5, the gas generants 4 in the combustion chamber 5 will be burnt to generate a high-temperature gas in the combustion chamber 5. In this instance, the pressure inside the combustion chamber 5 is raised. Since the housing 3 is in an approximately spherical shape, it is sufficiently strong to withstand the pressure rise inside the combustion chamber 5 and remarkably small in deformation. Then, a high-temperature gas generated in the combustion chamber 5 is carried through the filter member 6 and discharged from the gas discharge openings 8 after breakage of a rupture member 11.

Here, when the high-temperature gas is carried through the filter member 6, the gas is cooled by the filter member 6 and residue remaining in the gas is also filtered at the same time. Further, since the filter member 6 is provided substantially across the combustion chamber 5, the filter member 6 can be used effectively. Therefore, the gas can be sufficiently cooled by the filter member 6 and discharged from the gas discharge openings 8 after a sufficient filtration of residue. Embodiment

Then, an explanation will be made specifically for the gas generator of the present invention as an embodiment. However, the invention will not be restricted thereto.

In the gas generator shown in FIG. 1, D, an outer diameter of the end plate portion 10 is established to be 70mm, H, a length of the housing 3 is 75mm, an opening diameter of the gas discharge openings 8 is 2. 6mm, the number of the gas discharge openings 8 is 20, and SD, a total opening area of the gas discharge openings 8 is 106mm$^2$. Further, h, a length of the inner cylindrical body 16 is established to be 62mm, d, an outer diameter of the inner cylindrical body 16 was 12mm, SE, a surface area of the inner cylindrical body 16 is 3700mm$^2$. In addition, the enhancer openings 15 are in a circular shape, the number of enhancer openings 15 is 22, an opening diameter of the enhancer openings 15 is 4.0mm and SA, a total opening area of the enhancer openings 15 is 276mm$^2$. Moreover, WG, a loaded quantity of gas generants 4 is 90g and WE, a loaded quantity of enhancers 17 is 3.8g.

Reference example 1

An example of manufacturing hollow-body shaped gas generants having both closed ends which are used in the gas generator of the present invention Ethanol 3% by weight and water 13% by weight are added to a mixture of guanidine nitrate 43.5% by weight, strontium nitrate 25% by weight, basic copper nitrate 25% by weight, acid clay 2.5% by weight and polyacrylamide 4% by weight, and the resultant is mixed and kneaded to obtain a mixed mass, which is then extruded at the pressure of 8MPa by using an extruder equipped with a dice having an inner diameter of 2mm and an inner hole pin having an outer diameter of 0.5mm at the exit. The thus-prepared bar-like molded article is fed between molding gears, while taken up by using a feed belt, and given recesses at a space of 4.4mm by male teeth of the molding gear. The article is cut off by folding it at the recesses, dried for 8 hours at 55°C and further dried for 8 hours at 110°C to obtain gas generants.

Brief Description of the Drawings

FIG. 1 is a cross-sectional view of the gas generator of the embodiment in the present invention.
FIG. 2 is a cross-sectional view of a conventional gas generator.

Description of Symbols

A:        gas generator
D:        end plate portion ⌀ outer diameter
D:        outer diameter of inner cylindrical body
H:        length of housing
h:        length of inner cylindrical body

1:        initiator shell
2:        closure shell
3:        housing
4:        gas generants
5:        combustion chamber
6:        filter member
7:        igniter
8:        gas discharge opening
9:        cylindrical portion
10,     14: end plate portion
11:      rupture member
12:      flange portion
13:      cylindrical portion
15:      enhancer opening
16:      inner cylindrical body
17:      enhancers
18:      squib
20:      presser member
21:      presser member
22:      cushion member
24:      filter presser member
25:      bottom portion

**Claims**

1.   A gas generator comprising: a metal housing having an initiator shell and a closure shell, a combustion chamber which is formed inside the housing and into which gas generants generating a high-temperature gas through combustion are loaded, a filter member disposed around the combustion chamber, an igniter loaded into the housing and igniting and burning the gas generants inside the combustion chamber and a plurality of gas discharge openings formed in the housing and discharging the gas generated in the combustion chamber,
wherein either or both of the initiator shell and the closure shell constituting the housing have semispherical or semi-oval end plate portions and cylindrical portions having a diameter D formed continuously from these end plate portions, H/D or a ratio of H, a housing distance between an end plate portion of the initiator shell and that of the closure shell to D, an outer diameter of the cylindrical portions is in the range from 0.4 to 1.3, the igniter is mounted inside the housing and provided with an inner cylindrical body having a plurality of enhancer openings and also a bottom portion, enhancers loaded into the inner cylindrical body and a squib mounted so as to be in contact with the enhancers inside the inner cylindrical 1 body, and d/D which is a ratio of d, an outer diameter of the inner cylindrical body to D, an outer diameter of the end plate portions is in the range from 0.1 to 0.5.

2.   A gas generator according to Claim 1, wherein h/ H, which is a ratio of h, a length of the inner cylindrical body, to H, a length of the housing in the direction of elongation of the inner cylindrical body, is the range from 0.5 to 0.95.

3.   A gas generator according to Claim 1, wherein a plurality of enhancer openings are available in any shape such as a circle, oval, long hole, rectangle, rhomboid or trapezoid.

4.   A gas generator according to Claim 1, wherein the number of enhancer openings is 4 or more.

5.   A gas generator according to Claim 1, wherein SA/SE, which is a ratio of SA, a total opening area of a plurality of enhancer openings, to SE, a surface area of the inner cylindrical body, is in the range from 0.01 to 0.4.

6.   A gas generator according to Claim 1, wherein SA/SD, which is a ratio of SA, a total opening area of a plurality of enhancer openings, to SD, a total opening area of a plurality of gas discharge openings, is in the range from 0.15 to 4.5.

7.   A gas generator according to Claim 1, wherein WG/WE which is a ratio of WG, a loaded quantity of the gas generants, to WE, a loaded quantity of enhancers, is in the range from 10 to 60.

FIG. 1

FIG. 2

<div align="center">

**INTERNATIONAL SEARCH REPORT**

</div>

| International application No. |
|---|
| PCT/JP2004/011231 |

**A. CLASSIFICATION OF SUBJECT MATTER**
Int.Cl⁷ B60R21/26

According to International Patent Classification (IPC) or to both national classification and IPC

**B. FIELDS SEARCHED**

Minimum documentation searched (classification system followed by classification symbols)
Int.Cl⁷ B60R21/26

Documentation searched other than minimum documentation to the extent that such documents are included in the fields searched
Jitsuyo Shinan Koho          1922-1996   Jitsuyo Shinan Toroku Koho   1996-2004
Kokai Jitsuyo Shinan Koho   1971-2004   Toroku Jitsuyo Shinan Koho   1994-2004

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 9-226509 A (Nippon Kayaku Co., Ltd.),<br>02 September, 1997 (02.09.97),<br>Full text; Figs. 1 to 7<br>(Family: none) | 1,3-7<br>2 |
| Y | JP 5-138007 A (Nippon Koki Co., Ltd.),<br>01 June, 1993 (01.06.93),<br>Full text; Figs. 1 to 6<br>& US 5397544 A1 | 2 |

☐ Further documents are listed in the continuation of Box C.      ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 17 November, 2004 (17.11.04) | 07 December, 2004 (07.12.04) |

| Name and mailing address of the ISA/ | Authorized officer |
|---|---|
| Japanese Patent Office | |
| Facsimile No. | Telephone No. |

Form PCT/ISA/210 (second sheet) (January 2004)